# EUROPÄISCHE PATENTSCHRIFT

(11) **EP 1 632 070 B1**
(45) Veröffentlichungstag und Bekanntmachung des Hinweises auf die Patenterteilung: **01.08.2007**
(21) Anmeldenummer: 04730873.9
(22) Anmeldetag: 03.05.2004
(51) Int. Cl.: H04L 25/02, H04L 7/10

(54) **VERFAHREN ZUR BESTIMMUNG VON KANALKOEFFIZIENTEN EINES DATENÜBERTRAGUNGSKANALS MIT VARIABLER ANZAHL VON KOEFFIZIENTEN**
METHOD FOR DETERMINING CHANNEL COEFFICIENTS OF A DATA TRANSFER CHANNEL WITH A VARIABLE NUMBER OF COEFFICIENTS
PROCEDE POUR DETERMINER DES COEFFICIENTS D'UN CANAL DE TRANSMISSION DE DONNEES A L'AIDE D'UN NOMBRE VARIABLE DE COEFFICIENTS

(30) Priorität: 11.06.2003 DE 10326283
(43) Veröffentlichungstag der Anmeldung: 08.03.2006
(73) Patentinhaber: SIEMENS AKTIENGESELLSCHAFT, 80333 München (DE)
(72) Erfinder: KRAKOWSKI, Claudiu, 82194 Gröbenzell (DE); VON BERGEN, Frank, 83607 Holzkirchen (DE); ZOLL, Ralf, 80802 München (DE)
(86) Internationale Anmeldenummer: PCT/EP2004/050685
(87) Internationale Veröffentlichungsnummer: WO 2004/110001

(56) Entgegenhaltungen:
- EP-A- 0 496 152
- EP-A- 0 691 770
- EP-A- 0 954 142
- EP-A- 1 067 709
- WO-A-02/09297
- US-A1- 2002 115 412
- WONJIN SUNG ET AL: "Combined MLSE/symbol-based-demodulation scheme for fading channels with and without delay spread" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, 8. September 1998 (1998-09-08), Seiten 895-899, XP010314563 ISBN: 0-7803-4872-9
- KRAKOVSZKY C ET AL: "Joint channel and DC offset estimation and synchronization with reduced computational complexity for an EDGE receiver" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY : IEEE, US, Bd. VOL. 1 OF 4. CONF. 54, 7. Oktober 2001 (2001-10-07), Seiten 2248-2251, XP010562369 ISBN: 0-7803-7005-8
- NEUNER HK BILITZA H ET AL: "SYNCHRONISATION EINER MOBILSTATION IM GMS-SYSTEM DMCS 900 (D-NETZ) SYNCHRONISATION OF MOBILE STATION IN GMS TDMA MOBILE RADIO COMMUNICATION SYSTEM DMCS 900 (D-NETZ)" FREQUENZ, SCHIELE UND SCHON GMBH. BERLIN, DE, Bd. 47, Nr. 3/4, März 1993 (1993-03), Seiten 66-72, XP000363421 ISSN: 0016-1136
- BJERKE B A ET AL: "A comparison of decision feedback equalization and data directed estimation techniques for the GSM system" 1997 IEEE 6TH. INTERNATIONAL CONFERENCE ON UNIVERSAL PERSONAL COMMUNICATIONS RECORD. SAN DIEGO, 12 - 16. OCT. 1997, IEEE INTERNATIONAL CONFERENCE ON UNIVERSAL PERSONAL COMMUNICATIONS, NEW YORK, IEEE, US, Bd. VOL. 2 CONF. 6, 12. Oktober 1997 (1997-10-12), Seiten 84-88, XP010248675 ISBN: 0-7803-3777-8

## Beschreibung

Die vorliegende Erfindung beschreibt ein Verfahren zur Bestimmung von Kanalkoeffizienten fⱼ eines Datenübertragungskanals zur Korrektur von Übertragungsveränderungen nach der Übertragung von Daten über den Datenübertragungskanal, wobei eine Sendebitfolge sᵢ nach ihrer Übertragung über den Datenübertragungskanal als Empfangsbitfolge eᵢ vorliegt und die Sendebitfolge sᵢ eine vorbestimmte Kanalschätzungsbitfolge νᵢ zur Bestimmung der Kanalkoeffizienten umfasst.

Derartige Verfahren sind aus dem Stand der Technik bekannt. Bei der Datenübertragung beispielsweise über Funk, wie zum Beispiel bei Mobilfunknetzen, tritt das Problem auf, dass ein von einem Sender abgeschicktes Sendesignal auf mehreren Wegen zu einem Empfänger gelangen kann. Dies kann zum einen der direkte Weg zwischen Sender und Empfänger sein, weiterhin können aber andere Signalkomponenten von Hindernissen, welche im Bereich zwischen Sender und Empfänger vorhanden sind, so abgelenkt werden, dass sie auf einem Umweg ebenfalls vom Sender zum Empfänger gelangen. Das führt dazu, dass ein vom Sender abgesendetes Datensignal üblicherweise zeitlich verzerrt wird. Damit der Empfänger des Funksignals das Sendesignal mit geringer Fehlerrate interpretieren kann, kann es erforderlich sein, diese Signalverzerrung aus dem empfangenen Signal herauszurechnen.

Dazu sind in der Funktechnik Methoden bekannt (siehe z.B.: 1.) Baier, Alfred: "Correlative and Iterative Channel Estimation in Adaptive Viterbi Equalizers für TDMA Mobile Radio Systems", ITG Fachtagung 1989 Nürnberg, ITG Fachbericht 107: Stochastische Methoden und Modelle in der Informationstechnik / 2.) Proakis, J.G.: "Digital Communications", McGraw-Hill, New York, 1983). Dabei werden sogenannte Kanalkoeffizienten des Datenübertragungskanals ermittelt, und mit den Kanalkoeffizienten die Übertragungsverzerrungen, beispielsweise unter Verwendung eines sogenannten Viterbi-Algorithmus, herausgerechnet. Die Qualität, mit der aus den empfangenen Daten die ursprünglich gesendeten Daten rekonstruiert werden können, hängt unter anderem davon ab, wie gut es gelingt, die aktuellen Kanalkoeffizienten des Datenübertragungskanals zu bestimmen.

Die Menge der relevanten Kanalkoeffizienten eines Datenübertragungskanals wird auch als Kanallänge bezeichnet und gibt an, wie viele aufeinanderfolgende Bits eines digitalen Sendesignals sich in einem Empfangsbit überlagern. Bei digitaler Funkübertragung wird die Kanallänge im Wesentlichen gegeben durch das Gelände zwischen Sender und Empfänger. So wird die Kanallänge in der Nähe von 1 sein, wenn sich zwischen Sender und Empfänger keine Gegenstände befinden. Die Kanallänge wird sich aber steigern, wenn der Sender und der Empfänger beispielsweise in einem Stadtgebiet oder in einem sehr bergigen Gebiet befinden, bei welchen Funksignale auf vielen verschiedenen Wegen vom Sender zum Empfänger gelangen können.

Bei herkömmlichen Mobilfunksystemen, wie beispielsweise GSM-, GPRS- oder EDGE-Systemen, werden beispielsweise vorbestimmte, sogenannte Kanalschätzungs-Bitfolgen verwendet. In diesen genannten digitalen Funksystemen ist die Datenübertragung zeitlich in sogenannte Zeitschlitze aufgeteilt. Dabei enthält jeder Zeitschlitz, oder eine bestimmte Auswahl von Zeitschlitzen, eine Kanalschätzungs-Bitfolge, welche sowohl dem Sender als auch dem Empfänger bekannt ist. Zur Bestimmung der Kanalkoeffizienten des aktuell vorliegenden Datenübertragungskanals wird dann beispielsweise durch Korrelation der Kanalschätzungs-Bitfolge mit der Empfangsbitfolge eine ungefähre Anfangsposition der Kanalschätzungs-Bitfolge innerhalb der Empfangsbitfolge bestimmt. Bei Kenntnis der ungefähren Anfangsposition wird dann wiederum durch Korrelation der Emp fangsbitfolge mit der bekannten Kanalschätzungs-Bitfolge ein Satz von Kanalkoeffizienten bestimmt.

Da dem Steuerungssystem des Mobilfunknetzes nicht bekannt ist, in welchem Geländeprofil sich Sender und Empfänger befinden, wird davon ausgegangen, dass diese sich im ungünstigst möglichen Gebiet befinden, d.h. es wird bei der Bestimmung der Kanalkoeffizienten von der maximal möglichen Anzahl L der Kanalkoeffizienten ausgegangen. Diese maximale Kanallänge kann beispielsweise bei GSM-Systemen L=6 oder bei EDGE-Systemen L=7 betragen. Solche maximalen Kanallängen liegen zum Beispiel vor, wenn sich gebirgiges Gelände zwischen Sender und Empfänger befindet.

Ausgehend von dieser maximalen Kanallänge L werden dann aus dem durch Korrelation bestimmten Satz von Kanalkoeffizienten die L benachbarten Kanalkoeffizienten ausgewählt, deren Summe der Betragsquadrate maximal ist. Wird das aktuell zwischen Sender und Empfänger befindliche Gelände allerdings durch ein Kanalprofil mit geringerer Kanallänge als der maximalen Kanallänge charakterisiert, so haben üblicherweise einige der L ausgewählten Kanalkoeffizienten relativ kleine Werte. Diese verschlechtern die Qualität der Rückrechnung der Übertragungsverzerrung. Daher werden vor dieser Rückrechnung Koeffzientenwerte unterhalb einer vorgegebenen Schwelle gestrichen und nur die dann verbleibenden Koeffizienten zur Rückrechnung verwendet.

Das Dokument WO 02/09297 A2 beschreibt eine Vorrichtung und ein Verfahren zur Kanalschätzung für ein Funkkommunikationssystem. Hierbei wird eine erste Kanalschätzung mit M taps berechnet, welche über die Zeit gemittelt wird. Es wird ein Schwellenwert unter Verwendung der Taps mit den niedrigsten Energien bestimmt. Unter Verwendung des Schwellenwertes werden die "channel order*"* und die einzelnen Tap-Positionen bestimmt.

Es ist ein Problem des Stands der Technik, dass, wenn die real vorliegende Kanallänge kleiner als die maximale Kanallänge ist, die Qualität der Rückrechnung der Übertragungsverzerrung vergleichsweise schlecht wird.

Daher ist es Aufgabe der vorliegenden Erfindung, ein Verfahren zur Verfügung zu stellen, welches für unterschiedliche vorliegende Kanalprofile verbesserte Kanalkoeffizienten und damit eine verbesserte Rückrechnung von bei der Datenübertragung auftretenden Verzerrungen ermöglicht.

Eine weitere Möglichkeit, ein Verfahren zu realisieren, bei welchem Kanalkoeffizienten sowohl unter Annahme einer maximalen Kanallänge L als auch einer effektiven Kanallänge L* ermittelt werden und welches zur Korrektur von Übertragungsveränderungen einen der beiden Koeffizientensätze verwendet, ist durch folgende Verfahrensschritte gegeben:
A) Ermittlung eines Kanalkoeffizientensatzes kⱼ, insbesondere mit mindestens L Kanalkoeffizientenwerten, unter Verwendung der Kanalschätzungs-Bitfolge νᵢ und der Empfangsbitfolge eᵢ;
B) Ermittlung der ersten Kanalkoeffizienten hⱼ, insbesondere von L ersten Kanalkoeffizienten hⱼ, aus dem Kanalkoeffizientensatz kⱼ unter Verwendung der Kanallänge L;
C) Bestimmung der reduzierten Kanallänge L* aus den ersten Kanalkoeffizienten hⱼ,
D) Ermittlung der zweiten Kanalkoeffizienten gⱼ, insbesondere von L* zweiten Kanalkoeffizienten gⱼ, aus dem Kanalkoeffizientensatz kⱼ unter der Annahme einer Kanallänge von L*;
E) Ermittlung der zur Korrektur der Übertragungsveränderung zu verwendenden Kanalkoeffizienten fⱼ aus den zweiten Kanalkoeffizienten gⱼ durch einen Vergleich der Beträge der zweiten Kanalkoeffizienten gⱼ mit einem zweiten Schwellwert, wobei diejenigen als zu verwendende Kanalkoeffizienten fⱼ gewählt werden, deren Beträge oberhalb des zweiten Schwellwerts liegen.

Im Rahmen dieses Verfahrens werden aus dem Kanalkoeffizientensatz kⱼ die ersten Kanalkoeffizienten unter Annahme der maximalen Kanallänge L ermittelt. Unter der Annahme, dass die Zahl der relevanten Kanalkoeffizienten im wesentlichen der Kanallänge entspricht, kann man davon ausgehen, dass die für das real vorliegende Kanalprofil relevanten Kanalkoeffizienten in den bestimmten ersten Kanalkoeffizienten hⱼ enthalten sein sollten.

Die Ermittlung der ersten Kanalkoeffizienten hⱼ aus dem Kanalkoeffizientensatz kⱼ kann beispielsweise durch Auswahl derjenigen L benachbarten Koeffizientenwerte aus dem Kanalkoeffizientensatz kⱼ ermittelt werden, bei welchen die Summe der Beträge oder Betragsquadrate maximal wird. Auf entsprechende Weise können auch die zweiten Kanalkoeffizienten gⱼ unter Verwendung der reduzierten Kanallänge L* durch Auswahl derjenigen L* benachbarten Kanalkoeffizienten aus dem Kanalkoeffizientensatz kⱼ ermittelt werden, die eine maximale Summe der Beträge oder maximale Summe der Betragsquadrate aufweisen. Aus den ersten Kanalkoeffizienten hⱼ wird nun die reduzierte Kanallänge L* bestimmt. Dies kann beispielsweise geschehen, indem die Zahl derjenigen Kanalkoeffizienten der ersten Kanalkoeffizienten hⱼ bestimmt wird, welche oberhalb eines vorgegebenen Schwellwerts liegen. Der Schwellwert kann dabei so gewählt werden, dass unterhalb des Schwellwerts liegende Kanalkoeffizienten vor allem durch Rauscheffekte oder ähnliche Störungseffekte dominiert werden. Die reduzierte Kanallänge L* ist dann durch die Anzahl der ausgewählten Kanalkoeffizienten gegeben. Unter Verwendung dieser reduzierten Kanallänge L* werden nun die zweiten Kanalkoeffizienten gⱼ aus dem Kanalkoeffizientensatz kⱼ bestimmt. Nachfolgend werden die zur Korrektur der Übertragungsveränderung zu verwendenden Kanalkoeffizienten fⱼ als diejenigen aus den zweiten Kanalkoeffizienten gⱼ ausgewählt, deren Beträge oberhalb eines vorgegebenen Schwellwerts liegen, wobei dieser Schwellwert auch 0 sein kann.

Ist der Datenübertragungskanal zeitlich in Zeitschlitze unterteilt, wobei mehrere der Zeitschlitze jeweils eine Kanalschätzungs-Bitfolge umfassen, so kann in einer vorteilhaften Ausgestaltung des Verfahrens nach dem Verfahrensschritt C) ein zeitlicher Mittelwert der reduzierten Kanallänge *L̅* unter Verwendung der reduzierten Kanallänge L* und mindestens einer weiteren entsprechenden reduzierten Kanallänge gebildet werden, wobei die mindestens eine weitere entsprechende reduzierte Kanallänge aus mindestens einem vorausgegangenen Zeitschlitz auf vergleichbare oder identische Weise bestimmt wurde und weiterhin im Verfahrensschritt D) anstatt der reduzierten Kanallänge L* der Mittelwert der reduzierten Kanallänge *L̅** verwendet werden.

Wie bei der vorstehend erwähnten Mittelwertbildung des Koeffizientenwerts E können durch eine solche Mittelwertbildung der reduzierten Kanallänge L* Schwankungen reduziert oder eliminiert werden, die beispielsweise durch Rauschen und/oder andere technische Störungen verursacht werden. Dazu können aus verschiedenen Zeitschlitzen jeweils reduzierte Kanallängen L* bestimmt und nachfolgend gemittelt werden. Dabei kann beispielsweise eine vorgegebene Anzahl von Zeitschlitzen mit einer Kanalschätzungs-Bitfolge berücksichtigt werden. Weiterhin können auch diejenigen innerhalb eines vorgegebenen Zeitraums befindlichen Zeitschlitze verwendet werden, welche eine Kanalschätzungs-Bitfolge umfassen.

Die Mittelwertbildung kann beispielsweise als arithmetischer Mittelwert, als geometrischer Mittelwert und/oder als gewichteter Mittelwert ausgebildet sein. Weiterhin kann die Verwendung einer Tiefpass-Funktion vorgesehen sein.

Zur Vereinfachung der Bestimmung der Kanalkoeffizienten kann in einer weiteren Ausgestaltung des beschriebenen Verfahrens eine Anfangs-Bitposition e_{A} der Kanalschätzungs-Bitfolge innerhalb der Empfangsbitfolge ermittelt werden. Die Anfangs-Bitposition e_{A} kann beispielsweise durch Korrelation der Empfangsbitfolge mit der Kanalschätzungs-Bitfolge νᵢ oder einer zweiten in der Sendebitfolge enthaltenen Kanalschätzungs-Bitfolge ν2ᵢ erfolgen. Dabei kann die zweite Kanalschätzungs-Bitfolge ν2ᵢ die Kanalschätzungs-Bitfolge νᵢ teilweise oder auch ganz umfassen.

Unter Umständen werden an eine Kanalschätzungs-Bitfolge zur Ermittlung von Kanalkoeffizienten etwas andere Anforderungen gestellt als an eine Kanalschätzungs-Bitfolge zur zumindest ungefähren Ermittlung der Anfangsposition der Kanalschätzungs-Bitfolge innerhalb der Empfangsbitfolge. Daher bietet die Verwendung einer zweiten Kanalschätzungs-Bitfolge, die die Kanalschätzungs-Bitfolge umfasst, Vorteile. So kann zum Auffinden der ungefähren Anfangsposition der Kanalschätzungs-Bitfolge innerhalb der Empfangsbitfolge eine entsprechend lange Bitfolge verwendet werden, während zur Bestimmung der Kanalkoeffizienten eine kürzere Kanalschätzungs-Bitfolge mit speziellen Autokorrelationseigenschaften verwendet wird(z.B. dass die Autokorrelation näherungsweise ein λ-Funktion ist).

Die vorstehend beschriebene Aufgabe wird weiterhin gelöst von einer elektronischen Schaltung, die zur Durchführung eines der vorstehend genannten Verfahren ausgebildet ist, wobei die elektronische Schaltung weiterhin als mindestens ein integrierter Schaltkreis ausgebildet sein kann.

Da das vorstehend beschriebene Verfahren insbesondere in Telekommunikations-Endgeräten mit einer Empfangseinheit zum Empfang der Empfangsbitfolge verwendet werden kann, wird die Aufgabe weiterhin auch von einem Telekommunikations-Endgerät mit einer entsprechenden elektronischen Schaltung oder mindestens einem entsprechenden integrierten Schaltkreis gelöst.

Weiterhin wird die Aufgabe gelöst von einem Telekommunikations-Endgerät mit einer Empfangseinheit zum Empfang der Empfangsbitfolge eᵢ, wobei das Telekommunikationsendgerät eine Ausführungsumgebung und/oder eine Datenverarbeitungseinrichtung zur Durchführung eines der vorstehend beschriebenen Verfahren aufweist.

Die vorstehend beschriebene Aufgabe wird auch von einem Computerprogrammprodukt gelöst, welches in den internen digitalen Speicher eines Telekommunikations-Endgeräts mit einer Prozessoreinheit geladen werden kann oder geladen wurde, und welches weiterhin Softwareabschnitte umfasst, mit welchen Schritte gemäß eines der vorstehend beschriebenen Verfahren ausgeführt werden, wenn das Computerprogrammprodukt im Telekommunikations-Endgerät ausgeführt wird.

Ein solches Computerprogrammprodukt bewirkt innerhalb des Telekommunikationsendgeräts die Bestimmung der zur Korrektur von Übertragungsveränderungen zu verwendeten Kanalkoeffizienten des Datenübertragungskanals, über welchen die Sendebitfolge gesendet wurde, nach einem der vorstehend erläuterten Verfahren. Der interne digitale Speicher und die Prozessor einheit können beispielsweise als getrennte Schaltungseinrichtungen, insbesondere integrierte Schaltkreise, ausgeführt sein oder weiterhin zum Beispiel auch in einer Schaltungseinrichtung, insbesondere einem integrierten Schaltkreis, integriert sein.

Weitere bevorzugte Ausführungsformen sind in den Unteransprüchen enthalten.

Im folgenden wird die Erfindung beispielhaft mit Bezug auf die beiliegenden Figuren erläutert. Es zeigen:
- Figur 1: schematische Darstellung einer Sende- und Empfangseinheit eines Mobilfunksystems;
- Figur 2: Ablaufdiagramm eines ersten Verfahrensbeispiels;
- Figur 3: Ablaufdiagramm eines zweiten Verfahrensbeispiels.

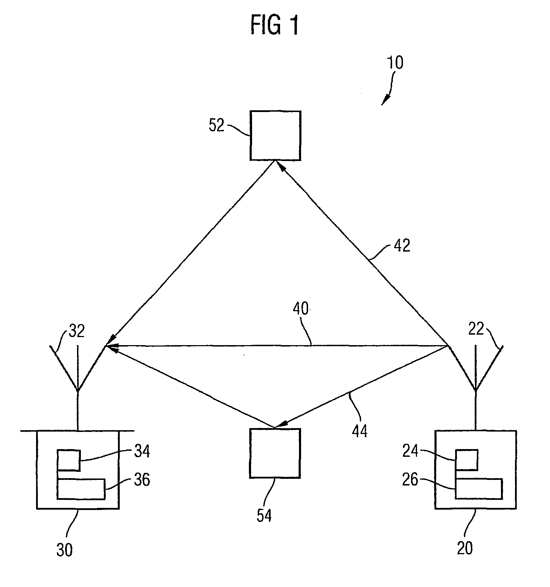

In Figur 1 ist schematisch ein Mobilfunksystem 10 mit einer Sendeeinheit 20 und einer Empfangseinheit 30 dargestellt. Der Sender 20 umfasst dabei eine Sendeantenne 22 zur Aussendung von Funksignalen sowie einen Mikroprozessor 24 zur Verarbeitung von in einer Speichereinrichtung 26 gespeicherten Programm- und/oder Nutzdaten. Der Empfänger 30 umfasst eine Empfangsantenne 32 zum Empfang der vom Sender 20 ausgesandten Funksignale sowie einen Mikroprozessor 34 zur Verarbeitung von in einer Speichereinrichtung 36 gespeicherten Programm- und/oder Nutzdaten oder von durch die Empfangsantenne 32 empfangenen Daten. Der Sender-Prozessor 24 und Sender-Speicher 26 sowie der Empfänger-Prozessor 34 und Empfänger-Speicher 36 können allgemein jeweils auf einem Chip integriert sein.

Die Ausbreitung der Funksignale von der Sendeeinheit 20 zur Empfangseinheit 30 kann über Signalwege 40, 42 und 44 erfolgen. Bei der Ausbreitung des Funksignals über den Weg 42 erfolgt eine Reflexion an einem Objekt 52 und bei der Ausbrei tung des Funksignals über den Weg 44 findet eine Reflexion an einem Hindernis 54 statt. Die über die Wege 40, 42 und 44 transportierten Funksignale kommen aufgrund des Laufzeitunterschieds zu verschiedenen Zeitpunkten an der Antenne 32 der Empfangseinheit 30 an. Dies führt zu einer Verzerrung des Funksignals bzw. einer digitalen Signalfolge, welche vom Sender 20 zum Empfänger 30 übertragen wird.

Die Zahl und Größe sowie das Reflexionsverhalten von Hindernissen wie beispielsweise des Hindernisses 52 und 54 bestimmt ein Kanalprofil eines Datenübertragungskanals zwischen dem Sender 20 und dem Empfänger 30.

### Verfahrensbeispiel 1:

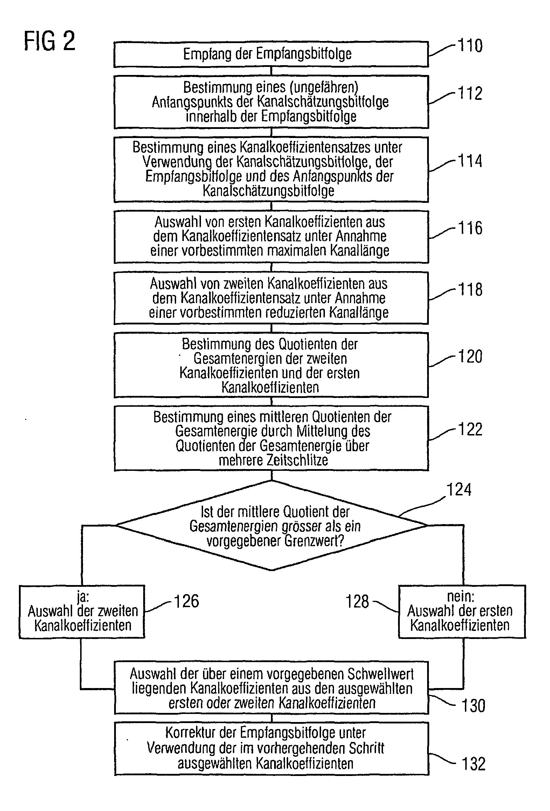

Im Folgenden wird ein das Verständnis der Erfindung erleichterndes erstes Beispiel für ein Verfahren beschrieben, wobei die wesentlichen Verfahrensschritte in einem in Figur 2 dargestellten Ablaufdiagramm dargestellt sind. In diesem ersten Beispiel wird die Bestimmung der Kanalkoeffizienten am Beispiel eines Mobilfunksystems beschrieben, wobei ein in Zeitschlitze eingeteilter Datenübertragungskanal Verwendung findet. Dabei umfasst der Datenübertragungskanal eine Folge von Zeitschlitzen, die jeweils eine Sendebitfolge mit einer Kanalschätzungs-Bitfolge νᵢ und einer zweiten Kanalschätzungs-Bitfolge ν2ᵢ umfasst, wobei weiterhin die zweite Kanalschätzungs-Bitfolge ν2ᵢ die Kanalschätzungs-Bitfolge νᵢ umfasst. Die betrachteten Zeitschlitze können entweder zeitlich direkt aufeinander folgen, wie beispielsweise bei einem UMTS-System, oder auch zeitlich beabstandet sein, wie beispielsweise bei einem GSM-, einem GPRS- oder einem EDGE-System.

Eine Sendebitfolge sᵢ wird in einem ersten Schritt 110 in Figur 1 innerhalb eines Zeitschlitzes von einem Mobilfunksender, beispielsweise einer Basisstation, an einen Mobilfunkempfänger, beispielsweise ein Mobiltelefon gesendet, und wird dort als Empfangsbitfolge eᵢ empfangen. In einem darauffol genden Schritt 112 wird durch Korrelation der Empfangsbitfolge eᵢ mit der zweiten Kanalschätzungs-Bitfolge ν2ᵢ die ungefähre Anfangsposition der zweiten Kanalschätzungs-Bitfolge innerhalb der Empfangsbitfolge eᵢ bestimmt. Damit ist auch die ungefähre Anfangsposition e_{A} der Kanalschätzungs-Bitfolge νᵢ bekannt.

In einem nächsten Schritt 114 wird ein Kanalkoeffizientensatz kⱼ mit 2L-1 Kanalkoeffizienten bestimmt, in dem die Kanalschätzungs-Bitfolge νᵢ mit der Empfangsbitfolge eᵢ, wie aus dem Stand der Technik bekannt, korreliert wird, und die Korrelation symmetrisch um e_{A} erfolgt. Die maximale Kanallänge L hängt dabei von dem verwendeten Mobilfunksystem und Datenübertragungskanal ab. So wird beispielsweise bei GSM-Systemen häufig eine maximale Kanallänge von 6 angesetzt, während beispielsweise bei EDGE-Systemen häufig eine maximale Kanallänge von 7 verwendet wird. Im Folgenden soll das Beispiel für eine maximale Kanallänge von L = 7 und eine vorbestimmte reduzierte Kanallänge L* = 5 beschrieben werden.

In einem nächsten Schritt 116 werden aus dem Kanalkoeffizientensatz kⱼ diejenigen sieben benachbarten Kanalkoeffizienten hⱼ ausgewählt, deren Summe der Betragsquadrate einen maximalen Wert ergeben. Dieser Summenwert bildet dann weiterhin einen ersten Koeffizientenwert E₁.

In einem nächsten Verfahrensschritt 118 werden diejenigen fünf benachbarten Kanalkoeffizienten gⱼ des Kanalkoeffizientensatzes kⱼ ausgewählt, deren Summe der Betragsquadrate einen maximalen Wert ergeben. Dieser maximale Summenwert bildet einen zweiten Koeffizientenwert E₂.

Im darauffolgenden Schritt 120 wird der Quotient des zweiten und ersten Koeffizientenwerts E₂ durch E₁ gebildet und einem Mittelungsalgorithmus zugeführt, welcher eine Tiefpass-Funktion umfasst. Dieser Mittelwertbildner führt eine Mitte lung der ihm über einen gewissen Zeitraum zugeführten Quotienten durch.

Im nächsten Schritt 122 wird diesem Mittelungsalgorithmus der aktuelle gemittelte Quotient entnommen, worauf im Schritt 124 der Quotient mit einem Schwellwert verglichen wird, der beispielsweise in der Gegend von 0,9 liegen kann. Der genaue Wert des Schwellwerts hängt vom verwendeten Mobilfunksystem sowie von den verwendeten technischen Einheiten und Verfahren ab. Ist der Quotient im Verfahrensschritt 126 größer als der Schwellwert von 0,9, so wird der zweite Satz von Kanalkoeffizienten gⱼ ausgewählt, ansonsten werden in Schritt 128 die ersten Kanalkoeffizienten hⱼ ausgewählt.

Zur Unterdrückung von nicht relevanten Kanalkoeffizienten werden weiterhin in einem Schritt 130 diejenigen Koeffizienten fⱼ aus den ausgewählten Koeffizienten hⱼ oder gⱼ ausgewählt, welche größer als ein vorgegebener zweiter Schwellwert sind. Dieser zweite Schwellwert wird so gewählt, dass nur solche Kanalkoeffizienten ausgewählt werden, welche nicht durch Hintergrundrauschen dominiert werden. Auch dieser zweite Schwellwert hängt vom verwendeten technischen System und vom verwendeten Mobilfunkstandard ab.

Die im Verfahrensschritt 130 ausgewählten Kanalkoeffizienten fⱼ werden dann zur Korrektur der Übertragungsveränderungen zusammen mit der Empfangsbitfolge beispielsweise einem Viterbi-Algorithmus zugeführt.

### Verfahrensbeispiel 2:

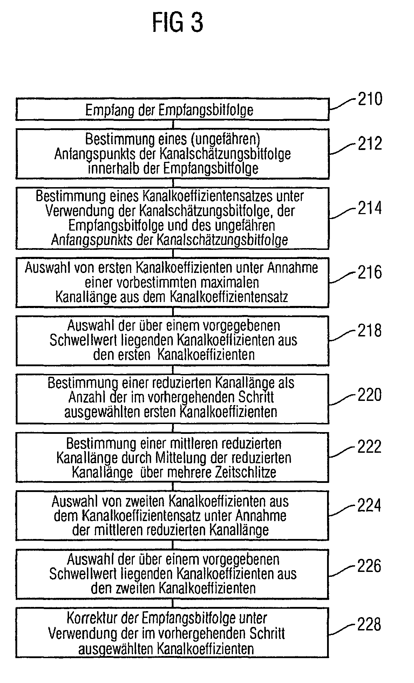

Im folgenden wird ein Beispiel für ein erfindungsgemäßes Verfahren dargestellt, wobei die wesentlichen Verfahrensschritte in Figur 3 dargestellt sind. Die ersten Verfahrensschritte dieses zweiten beispielhaften Verfahrens 210, 212, 214 und 216 entsprechen den Verfahrensschritten 110, 112, 114 und 116 des ersten Beispiels in Figur 2.

In einem dem Schritt 216 folgenden Schritt 218 werden aus den ausgewählten sieben ersten Kanalkoeffizienten hⱼ diejenigen ausgewählt, die über einem vorgegebenen dritten Schwellwert liegen. Dieser dritte Schwellwert ist dabei so gewählt, dass nur diejenigen der ersten Kanalkoeffizienten hⱼ ausgewählt werden, welche nicht durch Rauschen dominiert werden.

Im darauffolgenden Schritt 220 wird die Anzahl der in Schritt 218 ausgewählten Kanalkoeffizienten bestimmt und die reduzierte Kanallänge L* gleich der Zahl der ausgewählten Kanalkoeffizienten gesetzt.

Diese reduzierte Kanallänge L* wird in Schritt 222 einem Mittelungsalgorithmus zugeführt, wobei die Mittelung der reduzierten Kanallängen L^{*} in Schritt 222 auf vergleichbare Weise wie die Mittelung des Quotienten im Verfahrensschritt 122 des ersten Beispiels (Figur 2) durchgeführt wird.

Dem Mittelungsalgorithmus wird in einem nächsten Schritt 224 die aktuelle mittlere reduzierte Kanallänge *L̅** entnommen.

In einem folgenden Schritt 226 werden dann diejenigen *L̅** benachbarten Kanalkoeffizienten gⱼ aus dem Kanalkoeffizientensatz kⱼ ausgewählt, welche die maximale Summe der Betragsquadrate aufweisen. Diese ausgewählten Kanalkoeffizienten bilden zweite Kanalkoeffizienten gⱼ.

In einem folgenden Schritt 228 werden vergleichbar mit dem Schritt 218 diejenigen Kanalkoeffizienten fⱼ aus den zweiten Kanalkoeffizienten gⱼ ausgewählt, welche oberhalb eines vierten Schwellwerts liegen, wobei der vierte Schwellwert in ähnlicher Weise wie der dritte oder der zweite Schwellwert festgelegt werden.

Die in Schritt 228 ausgewählten Kanalkoeffizienten werden dann zur Korrektur der Übertragungsveränderung der Sendebitfolge einem Viterbi-Algorithmus zugeführt.

## Patentansprüche

1. Verfahren zur Bestimmung von Kanalkoeffizienten fⱼ eines Datenübertragungskanals zur Korrektur von Übertragungsveränderungen nach der Übertragung von Daten über den Datenübertragungskanal, wobei
- eine Sendebitfolge sᵢ nach Ihrer Übertragung über den Datenübertragungskanal als Empfangsbitfolge eᵢ vorliegt und
- die Sendebitfolge sᵢ eine vorbestimmte Kanalschätzungs-Bitfolge νᵢ zur Bestimmung der Kanalkoeffizienten umfasst,
umfassend die Schritte:
A.) Ermittlung eines Kanalkoeffizientensatzes kⱼ, insbesondere mit mindestens L Kanalkoeffizientenwerten, unter Verwendung der Kanalschätzungs-Bitfolge νᵢ und der Empfangsbitfolge eᵢ (214) ;
B.) Ermittlung von ersten Kanalkoeffizienten hⱼ, insbesondere von L ersten Kanalkoeffizienten hⱼ, aus dem Kanalkoeffizientensatz kⱼ unter Annahme einer maximalen Kanallänge L (216);
C.) Bestimmung einer reduzierten Kanallänge L^{*} aus den ersten Kanalkoeffizienten hⱼ (220),
D.) Ermittlung von zweite Kanalkoeffizienten gⱼ, insbesondere von L^{*} zweiten Kanalkoeffizienten gⱼ, aus dem Kanalkoeffizientensatz kⱼ unter der Annahme einer Kanallänge L^{*} (224);
**gekennzeichnet durch** die folgenden Schritte:
E.) Ermittlung der zur Korrektur der Übertragungsveränderung zu verwendenden Kanalkoeffizienten fⱼ aus den zweiten Kanalkoeffizienten gⱼ (226) **durch** einen Vergleich der Beträge der zweiten Kanalkoeffizienten gⱼ mit einem Schwellwert, wobei diejenigen als zu verwendende Kanalkoeffizienten fⱼ gewählt werden, deren Beträge oberhalb des Schwellwerts liegen.

2. Verfahren zur Bestimmung von Kanalkoeffizienten fⱼ eines Datenübertragungskanals zur Korrektur von Übertragungsveränderungen nach der Übertragung von Daten über den Datenübertragungskanal, wobei
- der Datenübertragungskanal in Zeitschlitze unterteilt ist und die Sendebitfolge innerhalb eines Zeitschlitzes übertragen wird,
- eine Sendebitfolge sᵢ nach Ihrer Übertragung über den Datenübertragungskanal als Empfangsbitfolge eᵢ vorliegt und
- die Sendebitfolge sᵢ eine vorbestimmte Kanalschätzungs-Bitfolge νᵢ zur Bestimmung der Kanalkoeffizienten umfasst,
umfassend die Schritte:
A.) Ermittlung eines Kanalkoeffizientensatzes kⱼ, insbesondere mit mindestens L Kanalkoeffizientenwerten, unter Verwendung der Kanalschätzungs-Bitfolge νᵢ und der Empfangsbitfolge eᵢ (214);
B.) Ermittlung von ersten Kanalkoeffizienten hⱼ, insbesondere von L ersten Kanalkoeffizienten hⱼ, aus dem Kanalkoeffizientensatz kⱼ unter Annahme einer maximalen Kanallänge L (216);
C.) Bestimmung einer reduzierten Kanallänge L* aus den ersten Kanalkoeffizienten hⱼ (220), **gekennzeichnet durch** die folgenden Schritte:
D.) nach dem Verfahrensschritt C.) wird ein zeitlicher Mittelwert der reduzierten Kanallänge *L̅** unter Verwendung der reduzierten Kanallänge L* und mindestens einer weiteren entsprechenden reduzierten Kanallänge gebildet, wobei die mindestens eine weitere entsprechende reduzierte Kanallänge aus mindestens einem vorausgegangenen Zeitschlitz auf identische Weise bestimmt wurde (222),
E.) Ermittlung von zweiten Kanalkoeffizienten gⱼ, insbesondere von *L̅** zweiten Kanalkoeffizienten gⱼ, aus dem Kanalkoeffizientensatz kⱼ unter der Annahme einer Kanallänge *L̅** (224) entsprechend dem zeitlichen Mittelwert der reduzierten Kanallänge aus Schritt D;
F.) Ermittlung der zur Korrektur der Übertragungsveränderung zu verwendenden Kanalkoeffizienten fⱼ aus den zweiten Kanalkoeffizienten gⱼ (226) **durch** einen Vergleich der Beträge der zweiten Kanalkoeffizienten gⱼ mit einem Schwellwert, wobei diejenigen als zu verwendende Kanalkoeffizienten fⱼ gewählt werden, deren Beträge oberhalb des Schwellwerts liegen.

3. Verfahren nach Anspruch 2,
**dadurch gekennzeichnet,**
**dass** der Mittelwert der reduzierten Kanallänge *L̅** ein arithmetischer Mittelwert, ein geometrischer Mittelwert und/oder ein gewichteter Mittelwert ist und/oder unter Verwendung einer Tiefpass-Funktion bestimmt wird.

4. Verfahren nach einem der vorhergehenden Ansprüche,
**dadurch gekennzeichnet,**
**dass** eine Anfangs-Bitposition e_{A} der Kanalschätzungs-Bitfolge innerhalb der Empfangsbitfolge ermittelt wird (112, 212), insbesondere dass die Ermittlung durch eine Korrelation der Empfangsbitfolge mit der Kanalschätzungs-Bitfolge νᵢ oder einer zweiten in der Sendebitfolge enthaltenen Kanalschätzungs-Bitfolge ν2ᵢ erfolgt.

5. Verfahren nach Anspruch 4,
**dadurch gekennzeichnet,**
**dass** die zweite Kanalschätzungs-Bitfolge die Kanalschätzungs-Bitfolge zumindest teilweise umfasst.

6. Elektronische Schaltung, die zur Durchführung eines Verfahrens gemäß einem der Ansprüche 1 bis 5 ausgebildet ist.

7. Elektronische Schaltung gemäß Anspruch 6,
**dadurch gekennzeichnet,**
**dass** die elektronische Schaltung als mindestens ein Integrierter Schaltkreis ausgebildet ist.

8. Telekommunikations-Endgerät mit einer elektronischen Schaltung gemäß Anspruch 6 oder 7.

9. Computerprogrammprodukt, welches in einen internen digitalen Speicher (36) eines Telekommunikations-Endgeräts mit einer Prozessoreinheit (34) geladen werden kann oder geladen wurde,
und welches weiterhin Softwareabschnitte umfasst, mit welchen die Schritte gemäß einem der Ansprüche 1 bis 5 ausgeführt werden, wenn das Computerprogrammprodukt im Telekommunikations-Endgerät ausgeführt wird.

## Claims

1. Method for determining channel coefficients fⱼ of a data transmission channel for correcting transmission variations after the transmission of data over the data transmission channel, wherein
- a transmit bit sequence sᵢ, after its transmission over the data transmission channel, is present as a receive bit sequence eᵢ and
- the transmit bit sequence sᵢ includes a predefined channel estimation bit sequence νᵢ for determining the channel coefficients,
comprising the steps:
A.) Determining a set of channel coefficients kⱼ, in particular with at least L channel coefficient values, using the channel estimation bit sequence νᵢ and the receive bit sequence eᵢ (214);
B.) Determining first channel coefficients hⱼ, in particular L first channel coefficients hⱼ, from the set of channel coefficients kⱼ assuming a maximum channel length L (216);
C.) Determining a reduced channel length L* from the first channel coefficients hⱼ (220),
D.) Determining second channel coefficients gⱼ, in particular L* second channel coefficients gⱼ, from the set of channel coefficients kⱼ assuming a channel length of L* (224);
E.) Determining the channel coefficients fⱼ used for correcting the transmission variation from the second channel coefficients gⱼ (226) by comparing the absolute values of the second channel coefficients gⱼ with a threshold value, the channel coefficients fⱼ whose absolute values are above the threshold value being selected as the ones to be used.

2. Method for determining channel coefficients fⱼ of a data transmission channel for correcting transmission variations after the transmission of data over the data transmission channel, wherein
- the data transmission channel is subdivided into time slots and the transmit bit sequence is transmitted within a time slot,
- a transmit bit sequence sᵢ, after its transmission over the data transmission channel, is present as a receive bit sequence eᵢ and
- the transmit bit sequence sᵢ includes a predefined channel estimation bit sequence νᵢ for determining the channel coefficients,
comprising the steps:
A.) Determining a set of channel coefficients kⱼ, in particular with at least L channel coefficient values, using the channel estimation bit sequence νᵢ and the receive bit sequence eᵢ (214);
B.) Determining first channel coefficients hⱼ, in particular L first channel coefficients hⱼ, from the set of channel coefficients kⱼ assuming a maximum channel length L (216);
C.) Determining a reduced channel length L* from the first channel coefficients hⱼ (220),
**characterized by** the following steps:
D.) After step C.) a time average of the reduced channel length *L̅** is taken using the reduced channel length L* and at least one other corresponding reduced channel length, the at least one other corresponding reduced channel length having been determined from at least one previous time slot in an identical manner (222),
E.) Determining second channel coefficients gⱼ, in particular *L̅** second channel coefficients gⱼ, from the set of channel coefficients kⱼ assuming a channel length of *L̅** (224) corresponding to the time average of the reduced channel length from step D;
F.) Determining the channel coefficients fⱼ used for correcting the transmission variation from the second channel coefficients gⱼ (226) by comparing the absolute values of the second channel coefficients gⱼ with a threshold value, the channel coefficients fⱼ whose absolute values are above the threshold value being selected as the ones to be used.

3. Method according to claim 2,
**characterised in that** the average value of the reduced channel length *L̅** is an arithmetic mean, a geometric mean and/or a weighted mean and/or is determined using a low-pass function.

4. Method according to one of the preceding claims,
**characterised in that** an initial bit position e_{A} of the channel estimation bit sequence within the receive bit sequence is determined (112, 212), in particular that it is determined by correlating the receive bit sequence with the channel estimation bit sequence νᵢ or a second channel estimation bit sequence ν2ᵢ contained in the transmit bit sequence.

5. Method according to claim 4,
**characterised in that** the second channel estimation bit sequence at least partially includes the channel estimation bit sequence.

6. Electronic circuit embodied to carry out a method according to one of claims 1 to 5.

7. Electronic circuit according to claim 6,
**characterised in that** the electronic circuit is embodied as at least one integrated circuit.

8. Telecommunications terminal with an electronic circuit according to claim 6 or 7.

9. Computer program product which can be or has been loaded into an internal digital memory (36) of a telecommunications terminal with a processor unit (34),
and which additionally includes software sections with which the steps according to one of claims 1 to 5 are executed when the computer program product is run in the telecommunications terminal.

## Revendications

1. Procédé pour déterminer des coefficients de canal fⱼ d'un canal de transmission de données pour corriger des variations de transmission après la transmission de données par le canal de transmission de données,
- une séquence de bits d'émission sᵢ étant présente après leur transmission par le canal de transmission de données sous la forme de séquence de bits de réception eᵢ et
- la séquence de bits d'émission sᵢ comprenant une séquence de bits d'évaluation de canal νᵢ prédéfinie pour déterminer les coefficients de canal,
comprenant les étapes suivantes :
A) détermination d'un ensemble de coefficients de canal kⱼ, en particulier avec au moins L valeurs de coefficients de canal, en utilisant la séquence de bits d'évaluation de canal νᵢ et la séquence de bits de réception eᵢ (214) ;
B) détermination de premiers coefficients de canal hⱼ, en particulier de L premiers coefficients de canal hⱼ, à partir de l'ensemble de coefficients de canal kⱼ avec l'hypothèse d'une longueur de canal L maximale (216) ;
C) détermination d'une longueur de canal L* réduite à partir des premiers coefficients de canal hⱼ (220) ;
D) détermination de seconds coefficient de canal gⱼ, en particulier de L* seconds coefficients de canal gⱼ, à partir de l*'*ensemble de coefficients de canal kⱼ avec l'hypothèse d'une longueur de canal L* (224) ;
**caractérisé par** les étapes suivantes :
E) détermination des coefficients de canal fⱼ à utiliser pour la correction de la variation de transmission à partir des seconds coefficients de canal gⱼ (226) par une comparaison des valeurs des seconds coefficients de canal gⱼ avec une valeur seuil, sachant qu'on choisit comme coefficients de canal fᵢ à utiliser ceux dont les valeurs sont supérieures à la valeur seuil.

2. Procédé pour déterminer des coefficients de canal fⱼ d'un canal de transmission de données pour corriger des variations de transmission après la transmission de données par le canal de transmission de données,
- le canal de transmission de données étant subdivisé en créneaux temporels et la séquence de bits d'émission étant transmise à l'intérieur d'un créneau temporel,
- une séquence de bits d'émission sᵢ étant présente après sa transmission par le canal de transmission de données sous la forme de séquence de bits de réception eᵢ,
- la séquence de bits d'émission Sᵢ comprenant une séquence de bits d'évaluation de canal vᵢ prédéfinie pour la détermination des coefficients de canal,
comprenant les étapes suivantes
A) détermination d'un ensemble de coefficients de canal kⱼ, en particulier avec au moins L valeurs de coefficients de canal, avec l'utilisation de la séquence de bits d'évaluation de canal vᵢ et la séquence de bits de réception eᵢ (214) ;
B) détermination de premiers coefficients de canal hⱼ, en particulier de L premiers coefficients de canal hⱼ, à partir de l'ensemble de coefficients de canal kⱼ avec l'hypothèse d'une longueur de canal L maximale (216) ;
C) détermination d'une longueur de canal L^{*} réduite à partir des premiers coefficients de canal hⱼ (220);
**caractérisé par** les étapes suivantes:
D) après l'étape de procédé C), on forme une valeur moyenne dans le temps de la longueur de canal *L̅** réduite en utilisant la longueur de canal L* réduite et au moins une autre longueur de canal réduite appropriée, la au moins une autre longueur de canal réduite appropriée ayant été déterminée de façon identique à partir d'au moins un créneau temporel précédent (222) ;
E) détermination de seconds coefficients de canal gⱼ, en particulier de *L̅** seconds coefficients de canal gⱼ, à partir de l'ensemble de coefficients de canal kⱼ avec l'hypothèse d'une longueur de canal *L̅** (224) en fonction de la valeur moyenne dans le temps de la longueur de canal réduite provenant de l'étape D ;
F) détermination des coefficients de canal fⱼ à utiliser pour la correction de la variation de transmission à partir des seconds coefficients de canal gⱼ (226) par une comparaison des valeurs des seconds coefficients de canal gⱼ avec une valeur seuil, sachant qu'on choisit comme coefficients de canal fⱼ à utiliser ceux dont les valeurs sont supérieures à la valeur seuil.

3. Procédé selon la revendication 2,
**caractérisé en ce que**
la valeur moyenne de la longueur de canal *L̅** réduite est une valeur moyenne arithmétique, une valeur moyenne géométrique et/ou une valeur moyenne pondérée et/ou est déterminée en utilisant une fonction de filtre passe-bas.

4. Procédé selon l'une quelconque des revendications précédentes,
**caractérisé en ce que**
une position de bit initiale e_{A} de la séquence de bits d'évaluation de canal est déterminée à l'intérieur de la séquence de bits de réception (112, 212), en particulier lorsque la détermination s'effectue par une corrélation de la séquence de bits de réception avec la séquence de bits d'évaluation de canal vᵢ ou d'une seconde séquence de bits d'évaluation de canal v2ᵢ incluse dans la séquence de bits d'émission.

5. Procédé selon la revendication 4,
**caractérisé en ce que**
la seconde séquence de bits d*'*évaluation de canal comprend au moins en partie la séquence de bits d*'*évaluation de canal.

6. Circuit électronique, qui est réalisé pour la mise en oeuvre d'un procédé selon l'une quelconque des revendications 1 à 5.

7. Circuit électronique selon la revendication 6,
**caractérisé en ce que**
le circuit électronique est conçu comme au moins un circuit intégré.

8. Terminal de télécommunication avec un circuit électronique selon la revendication 6 ou 7.

9. Produit de programme d'ordinateur, qui peut être chargé ou qui a été chargé dans une mémoire (36) numérique interne d'un terminal de télécommunication avec une unité de processeur (34),
et qui comprend également des parties de logiciel avec lesquelles les étapes selon l'une quelconque des revendications 1 à 5 sont réalisées lorsque le produit de programme d'ordinateur est exécuté dans le terminal de télécommunication.
